Europäisches Patentamt

European Patent Office

Office européen des brevets

(11) Publication number: **0 251 765**
**A2**

# (12) EUROPEAN PATENT APPLICATION

(21) Application number: 87305785.5

(22) Date of filing: 30.06.87

(51) Int. Cl.⁴: **E 06 B 7/22**
**B 60 R 13/06**

(30) Priority: 01.07.86 GB 8616042

(43) Date of publication of application:
07.01.88 Bulletin 88/01

(84) Designated Contracting States: **BE DE ES FR SE**

(71) Applicant: **SILENT CHANNEL PRODUCTS LIMITED**
**Ferrars Road**
**Huntingdon Cambridgeshire PE18 7HN (GB)**

(72) Inventor: **Riley, Steven Howard**
**3 Devonshire Close**
**Sawtry Cambridgeshire PE11 5SG (GB)**

(74) Representative: **Jones, Michael Raymond et al**
**HASELTINE LAKE & CO. Hazlitt House 28 Southampton**
**Buildings Chancery Lane**
**London WC2A 1AT (GB)**

(54) Sealing strip.

(57) There is disclosed a seal (1) having a channel (7) intended to receive an edge region (14) of a fixed pane of glazing material (15), the seal (1) including a first side wall (3), a second side wall (4) and a base portion (2), the first and second side walls (3, 4) defining opposite regions of the channel (7), the first side wall (3) being capable of adopting either of a first position, in which the first side wall (3) and the second side wall (4) are a first distance apart, and a second position in which the first side wall (3) and the second side wall (4) are a second distance apart, characterised in that the second distance is shorter than said first distance, and in that the seal (1) is provided with a lever component (13) capable of being acted on by the edge (14) of a pane of glazing material (15) and thereby to cause the first side wall (3) to move from the first position to the second position.

A method of securing a seal around the peripheral edge region of a pane of glazing material, using a seal as described above is also described.

Figure 2

EP 0 251 765 A2

Bundesdruckerei Berlin

**Description**

## SEALING STRIP

This invention relates to a sealing strip and is more particularly concerned with a sealing strip for a fixed pane of glazing material such as a fixed windscreen or rear screen of an automobile. It is to be appreciated, however, that the sealing strip of this invention may also be employed in the sealing of any fixed window. This type of seal is commonly known in the trade as a "lightseal".

A sealing strip which is presently used for mounting and sealing a fixed pane of glazing material is made of a flexible rubber material. The seal includes a generally U-shaped channel which channel is defined by two side walls, and a base portion from which the side walls extend. In use, the peripheral edge region of a pane of glazing material is received in the channel in order to provide a rubber seal which extends around the periphery of the pane of glazing material. The base portion of the sealing strip may also be provided, in a region remote from the channel, with further integral rubber lips for sealing the seal to, for instance, an automobile body. The pane of glazing material having the sealing strip along its peripheral edge is then positioned in the appropriate aperture of a body, for example a window opening in an automobile: the sealing strip is then secured to the body edge defining the aperture by a mastic or other adhesive substance.

Although this technique provides a convenient means by which a pane of glazing material may be sealed in the appropriate body aperture of a body or bodyshell, problems frequently arise because of the variable width of the channel of the seal in which the edge region of the pane of glazing material is to be received. Thus, the normal width often deviates by up to 10%. This results in an aperture which is either too narrow to receive the edge region of the glazing material and requires awkward manipulation of the seal and the pane of glass in order to squeeze the edge region of the pane of glazing material into the channel, or too wide, in which case the seal around the edge region of the glazing material is poor. Although it may be possible to alleviate this problem by more strict quality control regarding the width of the channel, this adds to the cost of the sealing strip and is, therefore, commercially unattractive.

According to a first aspect of the present invention, there is provided a seal (1) having a channel (7) intended to receive an edge region (14) of a fixed pane of glazing material (15), the seal including a first side wall (3), a second side wall (4) and a base portion (2), the first and second side walls (3, 4) defining opposite regions of the channel (7), the first side wall (3) being capable of adopting either of a first position, in which the first side wall (3) and the second side wall (4) are a first distance apart, and a second position in which the first side wall (3) and the second side wall (4) are a second distance apart, characterised in that the second distance is shorter than said first distance, and in that the seal (1) is provided with a lever component (13) capable of being acted on by the edge (14) of a pane of glazing material (15) and thereby to cause the first side wall (3) to move from the first position to the second position.

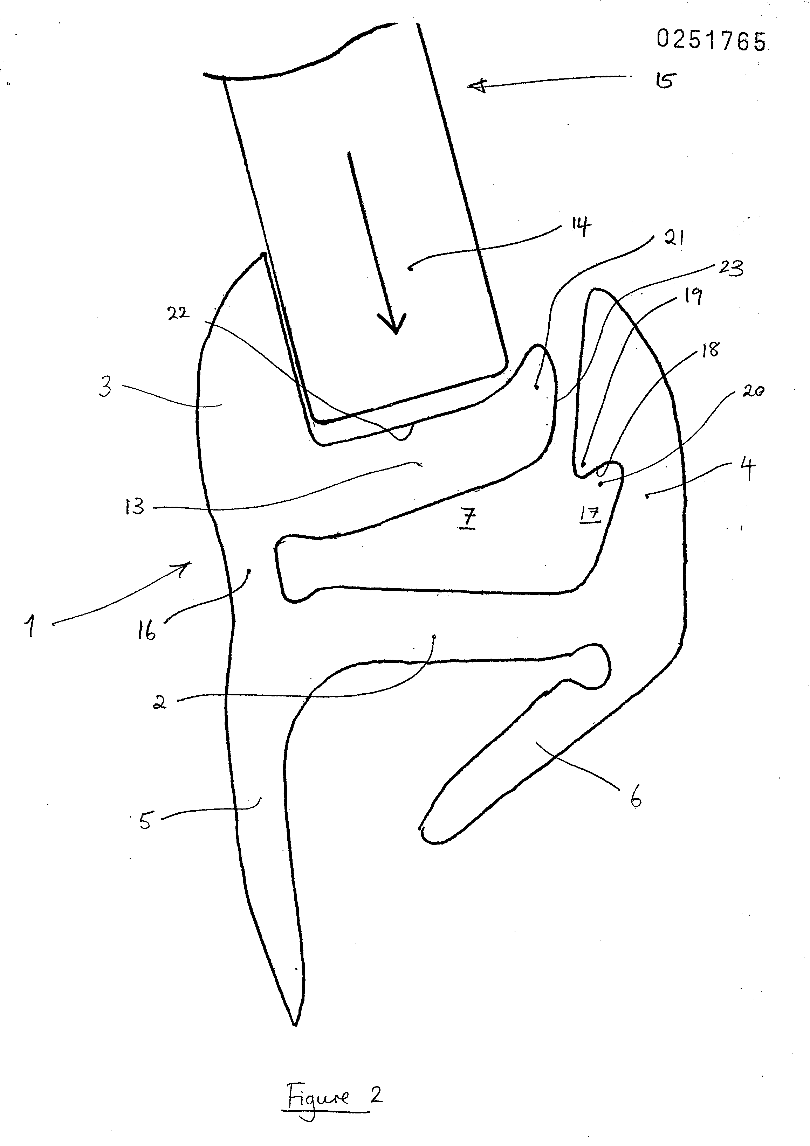

The use of reference numerals, corresponding with components of the seal shown in Figures 2 to 4, in the immediately preceding paragraph is intended to assist the reader and is not to be construed as limiting the scope of the claims to any degree.

Preferably the seal includes a part which serves as a hinge, to allow the first wall to move between the first and second positions. Most preferably, the first side wall is hinged to the base.

Preferably the seal includes a locking means permitting the first wall to be locked in the second position.

In a preferred embodiment, the lever component extends from the first side wall, in the region of the junction of the first side wall with the base portion, across the channel, toward the second wall, the lever component being inclined to the base portion when the first side wall is in the first position or, when the first side wall is in the second position, the lever component being generally parallel to the base portion. In this embodiment, the lever component is rigid with the first side wall such that, when the lever is depressed, the first side wall moves towards the second side wall. Preferably, the lever component is integral with the first side wall and projects in a direction inwardly of the channel, generally perpendicular to the first side wall.

The size of the first distance is governed by the width of the pane of glazing material which it is intended to seal. Thus, the first distance should be wider than the width of the edge region of the pane of glazing material to be sealed. As a result, the seal may easily be positioned around the peripheral edge region of the pane. Then, in practice, the first side wall is then caused to move to the second position in which the first side wall and the second side wall are a second distance apart. This second distance should be of a size which is the same as, or narrower than, the width of the edge region of the pane of glazing material to be accommodated. Preferably, the second distance is narrower than the width of the glazing material such that the glazing material is clamped in the channel, with the first and second side walls flexing under pressure.

In one embodiment of the seal according to the present invention, the first side wall is hinged to the base and also includes a lever having a free end region, which may be enlarged, and which is capable of being received in a recess in the second side wall, when the first side wall is in the second position. This serves effectively to lock the first side wall in the second position. The first side wall should, in this embodiment, be reasonably rigidly fixed to the lever in order that action of depressing the lever, whilst locking the free end region of the lever in the recess in the second side wall, effectively draws the first side wall towards the second side wall thereby narrowing the width of the channel.

The locking element may, in some embodiments, be viewed as a false base to the channel with the lever projecting from the first wall near the root of the first wall. The hinge between the first wall and the base portion may be formed as a constriction in the material forming the junction between the base portion and the first side wall. The first side wall is flexible about this constriction.

The recess in the second side wall is preferably positioned near the root of the second side wall. The upper end of the recess may be overhung such that an enlarged head region of the lever can be securely accommodated in the recess.

When the lever is locked in the recess, and the first side wall is in its second position, the lever may be substantially parallel to the base portion and there should be a space between the lever and the base of the seal. This space is considered necessary to permit the lever to be able to move to a position at which the free end region of the lever is below the overhanging edge of the recess of the second wall. At this position, because of the inherent springiness in the material of the seal, the false base is being urged upwards and away from the base portion. As pressure is removed from the false base, the false base moves upwards and is locked, with the first side wall in the second position.

The seal may include further, external, projections from its base. Thus, a first projection extending substantially normally from the base portion and tapering towards its end may be included. In addition, a second projection extending from the other side of the base can be provided. This second projection, preferably extends at an angle towards the first projection. In use, the first projection forms a strip of material which lies against the bodywork of the body aperture of the automobile and the second projection is compressed up against the base and assists in securing the seal to the peripheral edge of the body aperture. A mastic material or another suitable adhesive is used to secure the combined unit of a pane of glazing material and seal into the body aperture.

According to a further aspect of the present invention, there is provided a method of securing a seal around the peripheral edge region of a pane of glazing material, comprising providing a seal in accordance with the first aspect of the present invention in which the first wall is in the first position and in which the first distance is chosen to be wider than the width of the edge region of the pane of glazing material and the second distance is chosen to be the same as, or narrower than, the width of the edge region of the pane of glazing material; receiving the edge of the pane of glazing material in the channel defined by the first side wall and the second wall; and causing the first side wall to move to said second position such that the edge region of the pane of glazing material is clamped between said first and second side walls.

In the embodiment of the present invention in which the seal is provided with a lever, or false base, the action of pushing the edge region of the pane of glazing material into the channel will force the lever downwardly toward the base of the seal. By virtue of the lever being relatively rigidly attached to the first side wall, the first side wall is caused to move closer to the second side wall. In certain embodiments, once the lever reaches a level below that of the recess in the second side wall, the end region of the lever is received in the recess, to achieve a locking effect. The first side wall is then securely held in the second position.

The seal of the present invention is preferably made of a rubber material such as ethylene propylene diene monomer rubber: however, the seal might also be made of a plastics material or any other suitable resilient material from which sealing strips may be made.

The seal of the present invention is preferably extruded on a conventional extrusion line. It is envisaged that the sealing strip would be extruded with the first side wall in the first position. This has the result that, when the first side wall is in the second position, and in the absence of other factors, the first side wall tends to return toward the first position. This ensures that the end region of the lever, when present, is urged against the upper edge of the recess in the second side wall thereby acting to prevent the lever from undesirably slipping out of engagement with the recess.

For a better understanding of the present invention, and to show how the same may be carried into effect, reference will now be made, by way of an example, to the accompanying drawings in which :

Figure 1 shows a prior art seal for a fixed pane of glazing material;

Figure 2 shows a seal in accordance with the present invention, in a first position;

Figure 3 shows a seal in accordance with the present invention, in which the side walls are in another position;

Figure 4 shows a seal in accordance with the present invention, in a second position.

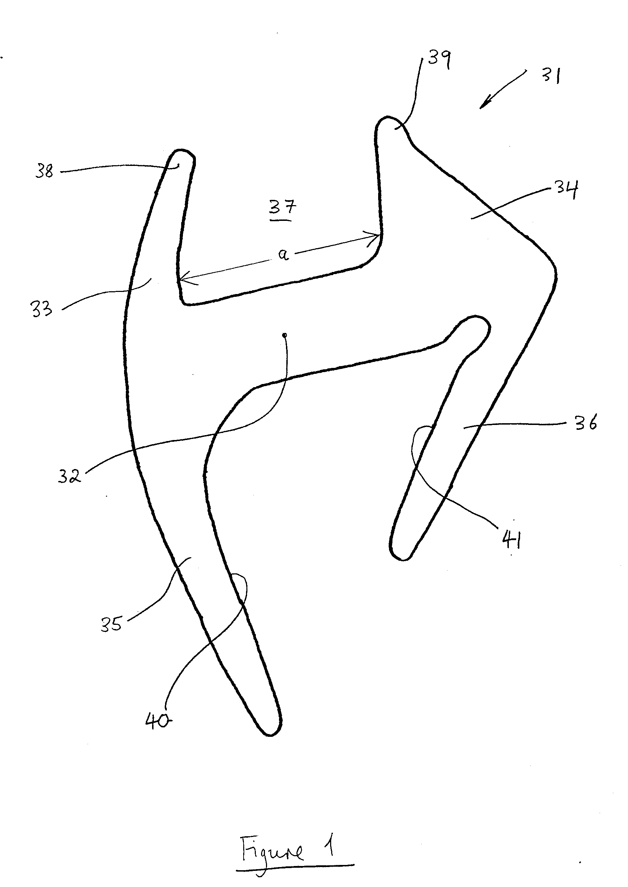

Referring firstly to Figure 1, a prior art sealing strip 31 comprises a base portion 32, a first side wall 33, a second side wall 34, and a first projecting lip 35 and second projecting lip 36 both in a region remote from the side walls 33, 34.

The base portion 32, first side wall 33 and second side wall 34 define a channel 37 intended to receive the edge region of a pane of glazing material, preferably glass (not shown). The seal 31, preferably made of a rubber by an extrusion technique, is flexible. Thus, the free end regions 38, 39 of the first and second side walls 33, 34 respectively are capable of flexing. This flexibility permits the channel 37 to be opened slightly as the edge region of the pane of glass is inserted into the channel 37, the free end regions 38, 39 flexing back into engagement with the pane of glass when the pane is received in the channel 37. Thus, the pane of glass is sealed in the channel 37. A seal 31 having the cross-section shown in Figure 1 is positioned by this technique around the entire peripheral edge of a pane of glass and the integral unit of the pane and seal 31 is then inserted into the appropriate body aperture of an automobile. On insertion into the body aperture, the first projecting limb 35 flexes and lies on the bodywork such that the inner surface 40 of the first projecting limb abuts the body work. The second projecting limb 36 is pressed upwards towards the base portion 32 such that the inner surface 41 of the second projecting limb comes into abutment with the base portion 32. A mastic material previously disposed around the edge of the body aperture seals the sealing strip 31 into the body aperture.

This prior art seal 31 has the drawback that the width a of the channel 37 will vary, since the manufacturing technique by which the seal is produced cannot guarantee a channel 37 of the necessary width with zero tolerance. The tolerance, which may be as high as 10%, means that, in one extreme, the edge region of the pane of glass will be loose in the channel 37 and, in the other extreme, the pane of glass will be very difficult to insert into the channel 37. This drawback adds considerably to the time required to fit the seal 31 around a pane of glass.

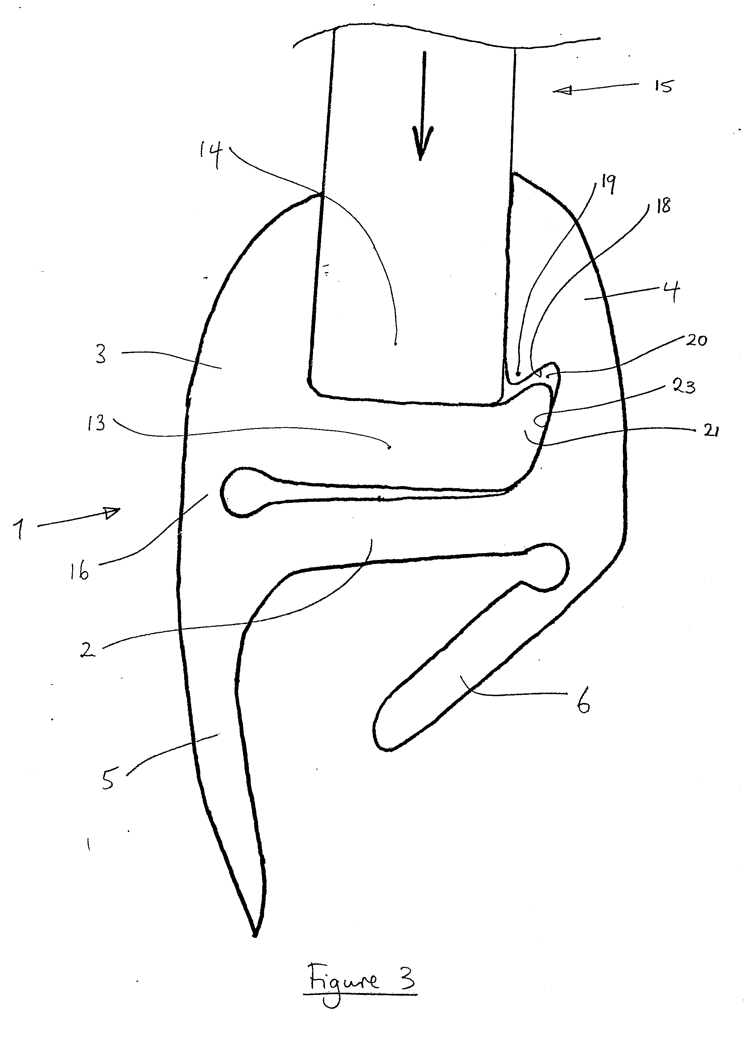

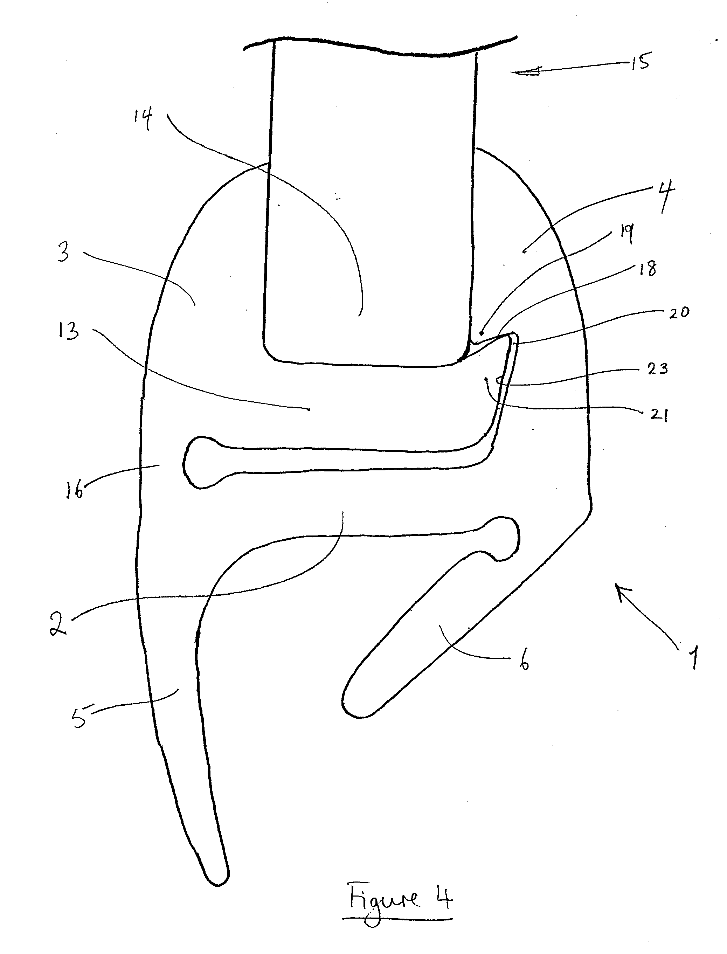

Figures 2, 3 and 4 show one embodiment of a seal 1 in accordance with the present invention. The seal 1 is shown in three separate configurations: a first configuration (Figure 2) in which the seal is in the same configuration as that in which it is extruded, the seal being unstressed; another position (Figure 3) in which the seal is in an extreme configuration adopted as the pane of glass is being inserted into the glass receiving channel 7 of the seal 1; and a second position (Figure 4) in which the edge region of the pane of glass is tightly sealed in the channel 7 of the seal 1.

As is shown in Figures 2, 3 and 4, the seal 1 comprises a base portion 2, a first side wall 3, a second side wall 4, a first projecting limb 5, a second projecting limb 6 and a lever 13. The first side wall 3 and second side wall 4 define opposite sides of the channel 7 intended to receive an edge region 14 of a pane 15 of glazing material, for example glass. The lever 13 defines a false base of the channel 7 although it is to be appreciated that the lever could be shorter than the lever shown in Figures 2 to 4. The lever 13 is integral with the first side wall 3 and, although the side walls 3, 4 and the lever 13 will be relatively flexible by virtue of the fact that the seal 1 is preferably made from rubber, there is sufficient strength between the lever 13 and the first side wall 3 to ensure that, when the lever 13 is depressed, the first side wall 3 moves correspondingly. The first side wall 3 is connected to the base portion 2 by a constricted neck region 16. This acts as a hinge about which the first side wall 3 and the lever/false base 13 pivot.

The second side wall 4 is provided with a recess 17. The recess 17 has an upper edge 18 which is overhung by a lip 19 to define a notch 20. The notch 20 is capable of receiving an enlarged head region 21 of the lever 13.

The lever 13 is, in Figure 2, shown to be slightly inclined to the base portion 2. The lever 13 is also slightly spaced from the base portion 2.

The projecting limbs 5, 6 perform the same function as the corresponding parts 35, 36 in Figure 1.

In use, a pane of glass 15, which is intended to be positioned in a body aperture of a motor vehicle, is taken and, around the peripheral edge region of the pane of glass 15, is laid a seal 1 which is in the configuration shown in Figure 2. The edge region 14 of the pane of glass 15 is inserted into the channel 7. Force is then applied to the pane of glazing material to press the edge region 14 of the pane into channel 7 against an upper surface 22 of the lever 13 to depress the lever 13. This causes the lever 13 to pivot about the constriction or hinge 16 towards the base portion 2 and the first side wall 3 is moved towards the second side wall 4 thereby narrowing the channel 7. In Figure 3, the pane of glazing material has been forced firmly into the channel 7 and an arcuate region 23 of the enlarged head region 21 of the lever 13 abuts the second side wall 4 in the recess 17. It is presently considered important that the seal can adopt the configuration shown in Figure 3 so that the lever 13 can pivot about the constriction or hinge 16 and the enlarged head region 21 of the lever 13 can slip beneath the lip 19 of the second side wall 4. As shown in Figure 4, when pressure is released from the glass 15, the lever 13 will move slightly away from the base portion 2 and the enlarged head region 21 will be locked in the notch 20 of the recess 17.

The configuration and dimensions of the seal 1 are chosen such that, when the seal is in the configuration shown in Figure 4, the channel 7 is of sufficient width to clamp a pane of glass 15 securely between the first and second side walls. The pane of glass, securely provided with its seal 1, may then be inserted into the appropriate body aperture of an automobile.

It is to be appreciated that it is not essential to have a lever 13 which is provided with a free end region capable of being accommodated in a recess in the second side wall. When there is no such free end region, the seal 1 will still be tightly held onto the edge region 14 as long as the lever remains depressed. This could be ensured when the unit of the pane of glass and seal is received into the appropriate body aperture of an automobile.

**Claims**

1. A seal having a channel intended to receive an edge region of a fixed pane of glazing material, the seal including a first side wall, a second side wall and a base portion, the first and second side walls defining opposite regions of the channel, the first side wall being capable of adopting either of a first position, in which the first side wall and the second side wall are a first distance apart, and a second position in which the first side wall and the second side wall are a second distance apart, characterised in that the second distance is shorter than said first distance, and in that the seal is provided with a lever component capable of being acted on by the edge of a pane of glazing material and thereby to cause the first side wall to move from the first position to the second position.

2. A seal according to Claim 1, characterised in that the first side wall is hinged so as to be capable of movement between the first position and the second position.

3. A seal according to Claim 2, characterised in that a constriction between the first side wall and the base constitutes the hinge.

4. A seal according to Claim 1 or 2 or 3, characterised in that a locking means is provided whereby the first side wall may be locked relative to the second side wall.

5. A seal according to any preceding claim, characterised in that the lever component extends from the first side wall, in the region of the junction of the first side wall with the base portion, across the channel, toward the second wall, the lever component being inclined to the base portion when the first side wall is in the first position or, when the first side wall is in the second position, the lever component being generally parallel to the base portion, and in that the lever component is rigid with the first side wall such that, when the lever is depressed, the first side wall moves towards the second side wall.

6. A seal according to any preceding claim, characterised in that the lever component is integral with the first side wall and projects in a direction inwardly of the channel, generally perpendicular to the first side wall.

7. A seal according to any preceding claim, characterised in that the lever has an enlarged free end region, and in that there is provided, in the second side wall, a recess into which the enlarged free end of the lever is received when the first side wall is in the second position.

8. A seal according to Claim 7, characterised in that the recess in the second side wall is positioned near the junction between the base portion and the second side wall.

9. A seal according to Claim 7 or 8, characterised in that the upper end of the recess is overhung such that the enlarged head region of the lever is capable of being accommodated in the recess, when the first side wall is in the second position.

10. A method of securing a seal around the peripheral edge region of a pane of glazing material, comprising providing a seal in accordance with any preceding claim in which the first wall is in the first position and in which the first distance is chosen to be wider than the width of the edge region of the pane of glazing material and the second distance is chosen to be the same as, or narrower than, the width of the edge region of the pane of glazing material; receiving the edge of the pane of glazing material in the channel defined by the first side wall and the second wall; and causing the first side wall to move to said second position such that the edge region of the pane of glazing material is clamped between said first and second side walls.

0251765

Figure 1

0251765

Figure 2

0251765

Figure 3

0251765

Figure 4